# FASCICULE DE BREVET EUROPEEN

(11) **EP 0 559 591 B1**
(45) Date de publication et mention de la délivrance du brevet: **13.09.1995**
(21) Numéro de dépôt: 93420098.1
(22) Date de dépôt: 04.03.1993
(51) Int. Cl.: B29C 65/08, F16K 31/40

(54) **Procédé d'assemblage par soudure ultrasonique d'une vanne électromagnétique**
Verfahren zum Zusammenbau eines elektromagnetischen Ventils durch Ultraschall-Schweissen
Process for assembling an electromagnetic valve by ultrasonic welding

(30) Priorité: 04.03.1992 FR 9202804
(43) Date de publication de la demande: 08.09.1993
(73) Titulaire: EATON S.A.M., MC-98000 Monaco (MC)
(72) Inventeur: Buffet, Eric, F-98000 Monaco (MC); Beretti, Michel, F-06000 Nice (FR); Briantais, Michel, F-06000 Nice (FR); Marck, Pascal, F-06340 La Turbie (FR); Sasportas, Joseph, F-98000 Monaco (MC)
(74) Mandataire: Bratel, Gérard

(56) Documents cités:
- EP-A- 0 050 756
- DE-A- 2 800 927
- FR-A- 2 085 294
- FR-A- 2 337 299
- FR-A- 2 359 348
- FR-A- 2 542 413
- US-A- 4 475 966
- PATENT ABSTRACTS OF JAPAN vol. 12, no. 160 (M-697)(3007) 14 Mai 1988& JP-A-62 278 019
- PATENT ABSTRACTS OF JAPAN vol. 10, no. 118 (M-475)(2175) 2 Mai 1986& JP-A-60 248 336
- PATENT ABSTRACTS OF JAPAN vol. 5, no. 99 (E-63)(771) 26 Juin 1981 & JP-A-56 042 952

## Description

L'invention concerne un procédé d'assemblage par soudure aux ultrasons de pièces en matière plastique et, plus particulièrement, de pièces en matière plastique soudable appartenant à la structure d'une vanne électromagnétique. Encore plus particulièrement, cette invention se rapporte à un procédé d'assemblage par soudure ultrasonique d'une vanne électromagnétique qui comprend, pour le guidage d'un noyau magnétique mobile, un guide tubulaire en matière plastique, avec une partie en forme de disque à la périphérie de laquelle est fixée une membrane déplacée par le noyau mobile, la périphérie de la partie en forme de disque étant à assembler au bord d'un corps en matière plastique, le procédé consistant à réaliser l'assemblage de la partie en forme de disque sur le corps en utilisant une pièce rapportée en forme de bague, qui est mise en place dans une rainure circulaire ménagée après pré-assemblage du guide tubulaire sur le corps, les ultrasons étant appliqués sur la bague rapportée seule pour la fixer au bord dudit corps, tout en immobilisant la périphérie de la partie en forme de disque.

La soudure ultrasonique utilisée pour l'assemblage de pièces en matière plastique génère, à l'intérieur des produits assemblés par ce procédé, des vibrations "haute fréquence" qui sont transmises aux éléments internes et créent des contraintes importantes, indésirables et souvent destructrices.

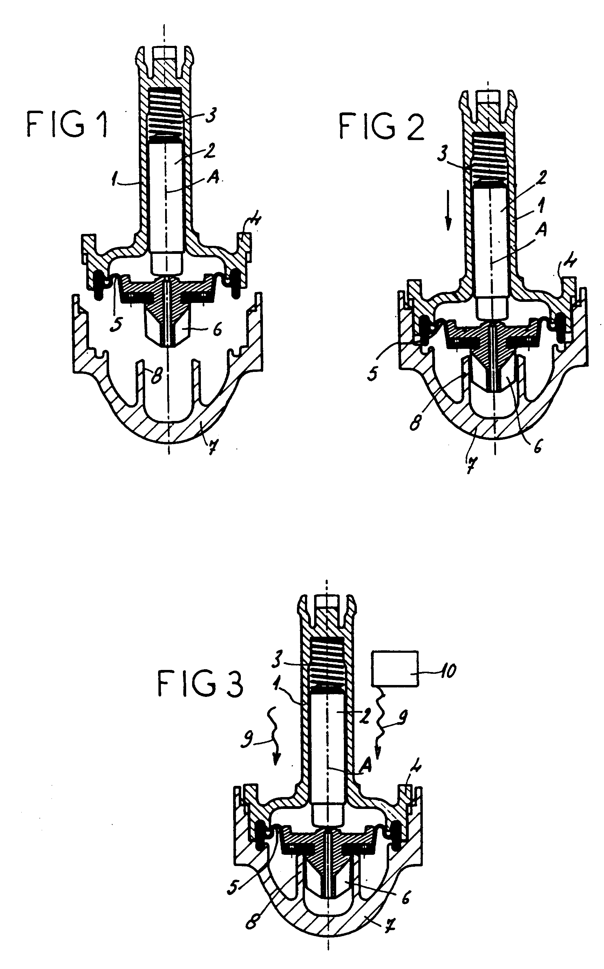

Les vues en coupe des figures 1 à 3 du dessin schématique annexé illustrent un procédé conventionnel d'assemblage par soudure ultrasonique, appliqué à une vanne électromagnétique. Comme le montre la figure 1, la vanne électromagnétique comprend un guide tubulaire 1 en matière plastique, d'axe désigné par A, pour le guidage du noyau magnétique mobile 2, et le logement d'un ressort de rappel 3, la bobine électromagnétique (non représentée) étant montée autour du guide de noyau 1. Ce guide 1 comporte à une extrémité une partie élargie en forme de disque 4, à la périphérie de laquelle est fixée une membrane annulaire 5 déplacée par le noyau mobile 2. Un insert de pilotage 6 est retenu sur la région centrale de la membrane 5. Par ailleurs, la vanne électromagnétique comprend un corps 7 en matière plastique, pourvu intérieurement dans sa région centrale de moyens de guidage 8 pour l'insert de pilotage 6. L'opération d'assemblage à réaliser consiste à réunir coaxialement et de façon étanche le bord circulaire du corps 7 avec la périphérie de la partie en forme de disque 4, cet assemblage emprisonnant le bord de la membrane 5.

De manière traditionnelle, l'opération d'assemblage s'effectue en rapprochant la partie en forme de disque 4 et le corps 7, comme illustré par la figure 2, puis en appliquant des ultrasons, symbolisés en 9 sur la figure 3, et fournis par un générateur 10, sur les parties périphériques ainsi rapprochées. Des vibrations sont alors transmises aux éléments internes, et elles risquent notamment de tordre le ressort 3 et de brûler la membrane 5, donc de détériorer ou même détruire ces éléments internes. En résumé, le procédé conventionnel consiste à appliquer les ultrasons 9 directement sur des parties de l'enveloppe externe de la vanne électromagnétique, renfermant les composants internes fragiles.

L'état de la technique qui vient d'être exposé est illustré, notamment, par les documents FR-A-2359348 et EP-A-0050756, ce dernier document étant une précédente demande de brevet européen au nom du Demandeur.

On connaît aussi, par le document FR-A-2542413, un procédé pour l'assemblage par soudure ultrasonique d'une électrovanne correspondant pour l'essentiel au préambule de la revendication 1. Ainsi, dans ce procédé, les ultrasons sont appliqués sur une pièce rapportée annulaire, mise en place dans un logement circulaire qui se trouve formé après que soit réalisé un pré-assemblage du guide tubulaire avec partie en forme de disque, d'une part, et du corps en matière plastique, d'autre part, le bord de la membrane étant emprisonné entre le bord circulaire du corps et la périphérie de la partie en forme de disque. La pièce rapportée étant ici de masse très faible, l'énergie consommée pour sa soudure par ultrasons est très inférieure à celle nécessaire dans le procédé conventionnel précédemment exposé avec référence aux figures 1 à 3. Ainsi, malgré l'utilisation d'une pièce supplémentaire, un tel procédé s'avère avantageux, d'une façon générale.

Selon la description donnée dans le document FR-A-2542413, la pièce annulaire rapportée est un clip, donc une pièce agissant par effet d'élasticité, qui intervient en s'accrochant par des ergots élastiques disposés radialement et faisant saillie selon une direction inclinée par rapport au plan de cette pièce annulaire. Il apparaît que ce clip ne se trouve pas enfoncé jusqu'au fond de son logement, même s'il y est introduit en force. Ainsi, l'assemblage obtenu n'est ni entièrement rigide, ni suffisamment précis dans ses caractéristiques dimensionnelles. De plus, le clip semble assurer la liaison de pièces métalliques, et non pas en matière plastique, dans la mesure où le document FR-A-2542413 traite de problèmes d'oxydation (page 1, lignes 27 à 30). En tout état de cause, ce document prévoit la mise en oeuvre d'une pièce annulaire de forme complexe, et il ne fournit aucune description technique détaillée du processus de soudage par ultrasons.

Cependant le clip se trouvant, au moment de son soudage, arc-bouté entre les deux pièces à assembler, il y a tout lieu de supposer que les vibrations ultrasoniques vont être simultanément transmises à ces deux pièces, et notamment au guide tubulaire, si bien que les risques de détérioration des éléments internes de l'électrovanne ne se trouvent pas encore supprimés.

En comparaison avec ce qui précède, la présente invention fournit un procédé d'assemblage par soudure ultrasonique nettement amélioré, ce procédé utilisant une pièce rapportée de forme simple, n'intervenant pas par son élasticité et procurant une liaison rigide, et parfaitement définie du point de vue géométrique, entre les éléments d'électrovanne à assembler, l'opération de soudure s'effectuant sans transmission de vibrations aux éléments internes de l'électrovanne, donc en préservant ces éléments.

A cet effet, dans le procédé selon l'invention d'assemblage par soudure ultrasonique d'une vanne électromagnétique, procédé appartenant au genre précisé en introduction, il est prévu que la rainure circulaire recevant la bague rapportée possède un fond étagé, résultant d'un décalage de deux épaulements angulaires ménagés respectivement sur la partie en forme de disque et sur le bord du corps, de telle sorte que la bague rapportée repose seulement sur l'une de ces deux pièces à assembler, à savoir le corps, avant et pendant l'application des ultrasons à cette bague.

On réalise ainsi, par des moyens simples, un assemblage de bonne tenue mécanique, par un procédé qui, grâce au choix du point d'application des ultrasons et à la configuration des pièces concernées, évite de transmettre des vibrations aux éléments internes de l'électrovanne, donc préserve ces éléments. Le pré-assemblage intervenant dans le procédé selon l'invention est réalisable par emmanchement forcé de la partie en forme de disque dans le corps, avant la pose de la bague rapportée.

Plus particulièrement, en raison de la mise en place de la bague rapportée dans une rainure circulaire à fond étagé, cette bague repose seulement sur le corps de l'électrovanne pendant l'application des ultrasons, ce qui signifie qu'elle n'entre pas en contact avec la partie en forme de disque du guide tubulaire. Ainsi, la soudure s'effectue entre la bague rapportée et le bord dudit corps, la partie en forme de disque n'étant pas soumise directement aux ultrasons, tout en se trouvant finalement assemblée de manière mécaniquement résistante, par sa périphérie, au corps. L'assemblage est donc réalisé sans transmission des ultrasons au corps tubulaire qui renferme le noyau magnétique mobile, son ressort de rappel et la membrane, si bien que tous ces composants internes sont protégés.

De toute façon, l'invention sera mieux comprise à l'aide de la description qui suit, en référence au dessin schématique annexé illustrant, à titre d'exemple non limitatif, un mode de mise en oeuvre de ce procédé d'assemblage par soudure ultrasonique d'une vanne électromagnétique :
Figures 1 à 3 (déjà commentées plus haut) illustrent un procédé conventionnel d'assemblage par soudure ultrasonique ;
Figures 4,5,6 et 7 sont des vues en coupe illustrant les phases successives du procédé d'assemblage conforme à la présente invention, pour une vanne électromagnétique similaire à celle des figures précédentes.

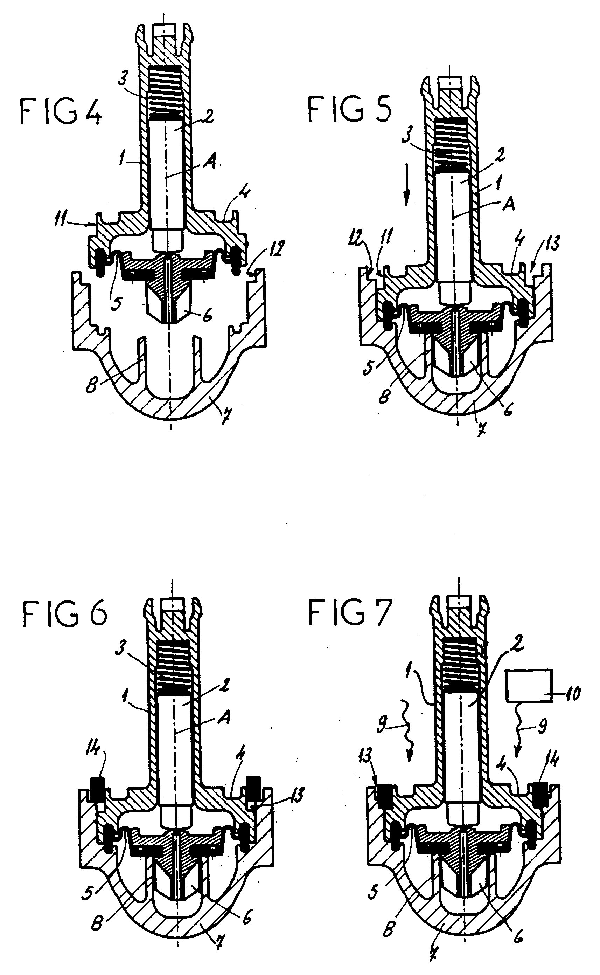

Ainsi les figures 4 à 7 se rapportent à l'assemblage d'une vanne électromagnétique, du même genre que celle précédemment considérée, les éléments correspondant à ceux des figures 1 à 3 étant désignés par les mêmes références numériques et n'étant pas décrits ici une nouvelle fois.

La figure 4 montre la vanne électromagnétique, avant assemblage du guide tubulaire 1 sur le corps 7. La partie en forme de disque 4 du guide 1 présente, à sa périphérie, un épaulement annulaire 11. L'autre épaulement annulaire 12 est formé au niveau du bord circulaire du corps 7.

Comme le montre la figure 5, la vanne électromagnétique est dans un premier temps pré-assemblée, par emmanchement forcé de la partie en forme de disque 4 dans le corps 7. Les deux épaulements 11 et 12 viennent alors sensiblement en correspondance, de manière à définir une rainure circulaire 13, avec un fond étagé résultant d'un léger décalage des deux épaulements 11 et 12, l'épaulement 12 se situant plus haut que l'épaulement 11.

Dans la phase suivante, illustrée par la figure 6, une bague en matière plastique 14 est posée dans la rainure circulaire 13. On notera que le fond étagé de cette rainure 13 définit, après la pose de la bague 14, un espace libre annulaire situé sous ladite bague, entre celle-ci et la périphérie de la partie en forme de disque 4.

Enfin, comme montré sur la figure 7, on procède à la soudure en appliquant les ultrasons 9, issus du générateur 10, sur la face supérieure de la bague 14. Ainsi, la bague 14 est soudée sur le bord du corps 7, et sa fixation par soudure assure la tenue mécanique de l'ensemble, la bague se trouvant finalement enfoncée jusqu'à la partie la plus basse de la rainure 13.

En raison de la configuration étagée du fond de la rainure circulaire 13, la bague 14 prend seulement appui sur le bord du corps 7 au cours de l'opération de soudure ultrasonique, et ainsi il y a uniquement interférence entre la bague 14 et le corps 7, comme le montre la comparaison des figures 6 et 7. Par conséquent, la partie en forme de disque 4 et tout le guide tubulaire 1 ne sont pas soumis directement aux ultrasons 9, si bien que les éléments internes, qui leur sont associés, ne subissent eux-mêmes pas de vibrations indésirables et restent préservés.

L'opération de soudure ultrasonique est réalisable ici à une fréquence de l'ordre de 20 kHz, avec une amplitude réglable pouvant être d'environ 80 µ. L'énergie à mettre en oeuvre pour cette opération de soudure est fortement réduite par rapport à celle nécessaire avec le procédé conventionnel, l'économie d'énergie pouvant être de 30 à 50 %, tout en conservant un assemblage final de résistance mécanique équivalente, adaptée à l'utilisation de la vanne électromagnétique.

Comme il va de soi, l'on ne s'éloignerait pas du cadre de l'invention par des modifications de forme des pièces à 'assembler, du moment que le procédé mis en oeuvre reste lui-même dans le cadre des revendications.

## Revendications

1. Procédé d'assemblage par soudure ultrasonique d'une vanne électromagnétique qui comprend, pour le guidage d'un noyau magnétique mobile (2), un guide tubulaire (1) en matière plastique, avec une partie en forme de disque (4) à la périphérie de laquelle est fixée une membrane (5) déplacée par le noyau mobile (2), la périphérie de la partie en forme de disque (4) étant à assembler au bord d'un corps (7,8) en matière plastique, le procédé consistant à réaliser l'assemblage de la partie en forme de disque (4) sur le corps (7,8) en utilisant une pièce rapportée en forme de bague (14), qui est mise en place dans une rainure circulaire (13) ménagée après pré-assemblage du guide tubulaire (1) sur le corps (7,8), les ultrasons (9) étant appliqués sur la bague rapportée (14) seule pour la fixer au bord dudit corps (7,8), tout en immobilisant la périphérie de la partie en forme de disque (4), caractérisé en ce que la rainure circulaire (13) recevant la bague rapportée (14) possède un fond étagé, résultant d'un décalage de deux épaulements angulaires (11,12) ménagés respectivement sur la partie en forme de disque (4) et sur le bord du corps (7,8), de telle sorte que la bague rapportée (14) repose seulement sur l'une de ces deux pièces à assembler, à savoir le corps (7,8), avant et pendant l'application des ultrasons (9) à cette bague (14).

2. Procédé selon la revendication 1, caractérisé en ce que la partie en forme de disque (4) est pré-assemblée par emmanchement forcé dans le corps (7,8), avant la pose de la bague rapportée (14).

## Claims

1. Method for assembling an electromagnetic valve by ultrasonic welding which comprises, for the guiding of a movable magnetic core (2), a tubular guide (1) made of plastic, with one part in the shape of a disc (4) at the periphery of which is fixed a membrane (5) moved by the movable core (2), the periphery of the disc-shaped part (4) being designed to be fitted to the edge of a body (7, 8) made of plastic, the method consisting of carrying out the fitting of the disc-shaped part (4) to the body (7, 8), using a ring-shaped insert (14) which is positioned in a circular groove (13) formed after the pre-fitting of the tubular guide (1) to the body (7, 8), ultrasound (9) being applied to the ring insert (14) alone in order to fix it to the edge of the said body (7, 8) while immobilizing the periphery of the disc-shaped part (4), characterised in that the circular groove (13) receiving the ring insert (14) has a stepped base, resulting from a staggering of two angular shoulders (11, 12) formed respectively on the disc-shaped part (4) and on the edge of the body (7, 8), so that the ring insert (14) rests solely upon one of these two parts to be fitted together, namely the body (7, 8), before and during the application of ultrasound (9) to this ring (14).

2. Method according to Claim 1, characterised in that the disc-shaped part (4) is pre-fitted by forced fitting into the body (7, 8), before the positioning of the ring insert (14).

## Patentansprüche

1. Verfahren zum Zusammenbau eines Elektromagnetventils durch Ultraschallschweißen, wobei das Elektromagnetventil zur Führung einen beweglichen, magnetischen Kern (2) aufweist, weiterhin eine rohrförmige Führung (1) aus Kunststoffmaterial mit einem scheibenförmigen Teil (4), an deren Umfang eine Membran (5) befestigt ist, die vom beweglichen Kern (2) verschoben werden kann, wobei der Umfang des scheibenförmigen Teils (4) am Rand eines Körpers (7,8) aus Kunststoffmaterial zu befestigen ist, wobei das Verfahren darin besteht, den Zusammenbau des scheibenförmigen Teils (4) am Körper (7,8) unter Verwendung eines ringförmigen Teils (14) durchzuführen, das in eine kreisförmige Rille (13) eingesetzt wird, die nach der Vormontage der rohrförmigen Führung (1) am Körper (7,8) angelegt wird, wobei die Ultraschallstrahlen (9) allein auf das ringförmige Teil (14) einwirken, um dieses am Rand des Körpers (7,8) zu befestigen, wobei der Umfang des scheibenförmigen Teils (4) festgelegt wird,
**dadurch gekennzeichnet**,
daß die kreisförmige Rille (13), die das ringförmige Teil (14) aufnimmt, einen gestuften Boden hat, der aus einer Verschiebung von zwei winkeligen Schultern (11,12) herrührt, die am scheibenförmigen Teil (4) bzw. am Rand des Körpers (7,8) vorgesehen sind derart, daß das ringförmige Teil (14) lediglich an einem der beiden zusammenzubauenden Teile anliegt, nämlich am Körper (7,8), und zwar vor und während der Anwendung des Ultraschalls (9) am ringförmigen Teil (14).

2. Verfahren nach Anspruch 1,
**dadurch gekennzeichnet**,
daß das scheibenförmige Teil (4) durch ein kräftiges Einstecken in den Körper (7,8) vormontiert wird, bevor das ringförmige Teil (14) eingesetzt wird.
